(19) **Europäisches Patentamt**

**European Patent Office**

**Office européen des brevets**

(11) **EP 1 429 256 A2**

(12) **EUROPEAN PATENT APPLICATION**

(43) Date of publication:
**16.06.2004 Bulletin 2004/25**

(51) Int Cl.⁷: **G06F 17/14**

(21) Application number: **03257773.6**

(22) Date of filing: **10.12.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | • **Samsung Electronics Co., Ltd.**<br>**Suwon 442-742, Gyeonggi-do (KR)** |
| (30) Priority: **10.12.2002 KR 2002078393** | (72) Inventor: **Sunwoo, Myung-hoon**<br>**Seocho-gu, Seoul. (KR)** |
| (71) Applicants:<br>• **Ajou University**<br>**Gyeonggi-do (KR)** | (74) Representative: **Ertl, Nicholas Justin**<br>**Elkington and Fife,**<br>**Prospect House,**<br>**8 Pembroke Road**<br>**Sevenoaks, Kent TN13 1XR (GB)** |

(54) **Apparatus and method for computing an FFT in a programmable processor**

(57)     A fast Fourier transform (FFT) operating apparatus and a method thereof operate the FFT corresponding to a kernel function unit of DMT (Discrete Multitone) and OFDM (Orthogonal Frequency Division Multiplexing) modems to transmit a data with high speed in a programmable processor capable of processing a high speed telecommunication algorithm in real-time by adopting advantages of the on-demand semiconductor based system and the programmable processor and applying to various standards by securing the design flexibility of the system.

FIG. 6

EP 1 429 256 A2

**Description**

BACKGROUND

The present invention relates to a fast Fourier transform (FFT) operating apparatus and an operation method thereof. More particularly, in a programmable processor which can be used in a variety of standards and enable processing of high speed telecommunication algorithms in real-time basis and also guarantee flexibility in system design, the present invention relates to a FFT operating apparatus and a method thereof for carrying out FFT operation which is the kernel function of DMT (Discrete MultiTone) and OFDM (Orthogonal Frequency Division Multiplexing) modems.

Generally, fast Fourier transform (FFT) is used in a variety of fields of communication systems such as the asymmetric digital subscriber line (ADSL), the wireless asynchronous transfer mode (ATM), the short distance wireless communication network, and the applications such as a matched filter, a spectrum analysis, and a radar. The FFT is especially required for the establishment of the OFDM, i.e., the next-generation high speed telecommunication algorithm. The FFT is the algorithm that transforms signal in time domain into frequency domain. Because the FFT can reduce the operations required for the Discrete Fourier Transform (DFT) significantly by using the periodicity of trigonometric function, operations can be carried out with efficiency. The DFT can be expressed by the following formula 1:

[Formula 1]

$$X(k) = \sum_{n=0}^{N-1} x(n) w_N^{kn}$$

$$k = 0,1,...,N-1$$

$$w_N^{kn} = e^{-j2\pi nk / N}$$

By re-arranging x(n) of the formula 1 into odd-numbered and even-numbered samples, respectively, N-point DFT being divided into two N/2 DTFs can be expressed as the following formula 2:

[Formula 2]

$$X(k) = \sum_{n=0}^{N-1} x(n) w_N^{nk}$$

$$= \sum_{n=0,even}^{N-1} x(n) w_N^{nk} + \sum_{n=0,odd}^{N-1} x(n) w_N^{nk}$$

$$= \sum_{l=0}^{N/2-1} x(2l) w_N^{2lk} + \sum_{l=0}^{N/2-1} x(2l+1) w_N^{(2l+1)k}$$

$$= \sum_{n=0}^{N/2-1} x(2n) w_{N/2}^{nk} + \sum_{n=0}^{N/2-1} x(2n+1) w_{N/2}^{(2n+1)k}$$

As the formula 2 is repeated, the N-point DFT is divided into several 2-point DFTs, and this process is referred to as the radix-2 DIT (Decimation-in-Time) FFT.

Among the methods to split the DFT of formula 1, radix-2 and radix-4 DIT FFTs are the most frequently used for the implementation.

The radix-2 DIT FFT is split into odd-numbered and even-numbered samples as in the formula 2, while the radix-4 DIT FFT is split into four sets. Between these two FFTs, the radix-2 DIT FFT has a simpler butterfly structure, and thus requires less number of multipliers and space. However, the number of stages increases in the radix-2 DIT FFT, and thus it consumes much more operation cycles compared to the radix-4 DIT FFT. The radix-4 DIT FFT can enable high speed processing, too, but it has a complicated butterfly structure and increases the number of multipliers.

Also, operations for butterfly input data and addresses are complicated, which are quite hard to implement. Additionally, as the FFT having $4^n$ length is performed, the radix-4 DIT FFT has to be used in combination with the radix-2 DIT FFT for the FFT having a $2^n$ length.

Further, the FFT is divided into DIT (Decimation-In-Time) FFT and DIF (Decimation-In-Frequency) FFT according to whether the dividing is based on time domain or frequency domain. The formula 2, which is divided with respect to time domain, is categorized into the DIT FFT. If the dividing is performed with respect to X(k) in the frequency domain, it can be categorized into the DIF FFT.

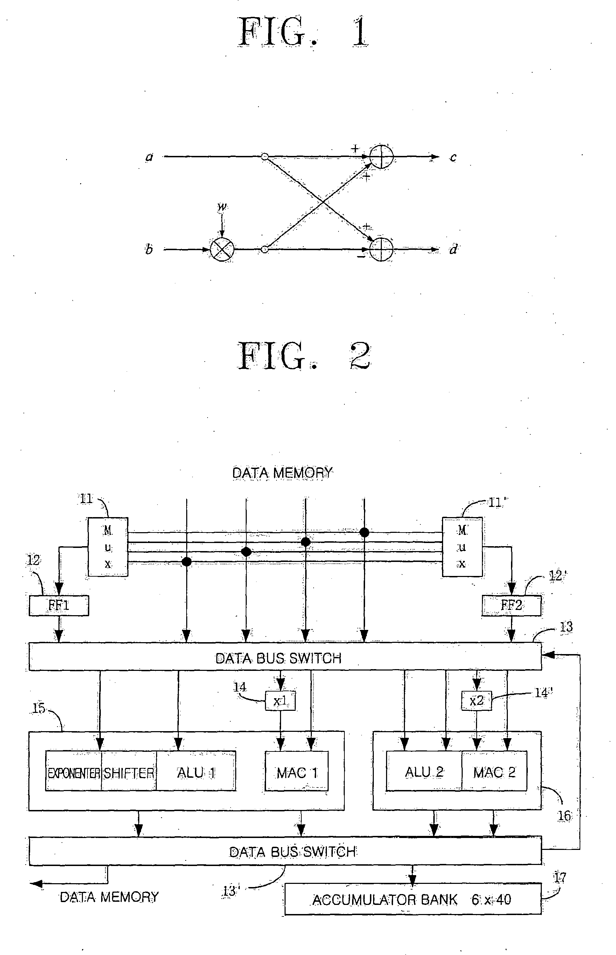

In the digital signal processor, it is the DIT FFT usually used for FFT. While the DFT FFT adopts the configuration of performing addition/subtraction and then multiplication, the DIT FFT, as shown in FIG. 1, adopts the configuration of performing multiplication and then addition/subtraction. Accordingly, for the digital signal processor based on a multiplier-accumulator, the DIT FFT is more suitable for operations.

For example, the DSP 56600 core is a fixed-point digital signal processor which consists of one 16x16 multiplier-accumulator (MAC) and one 40-bit ALU (arithmetic and logic unit), and carries out radix-2 complex FFT butterfly operation using two parallel shift instructions. Since the DSP 56600 core has the configuration of a single multiplier-accumulator, it has a wide area, however, with less operation efficiency compared with the configuration of a dual multiplier-accumulator. It takes 8N+9 cycles in order for the DSP 56600 core to perform N radix-2 complex FFT butterfly operations.

FIG. 2 shows another example of an operator using the DIT FFT, especially showing a Carmel™ DSP core by Infineon Technologies AG. The Carmel™ DSP core is a 16bit fixed-point decimation core, which includes two multiplexers 11, 11' to select values for a data memory, two latch registers 12, 12' to store selected outputs from the multiplexers 11, 11', data bus switches 13, 13' to switch data such as result of data operation at the data memory to input to a corresponding operator in accordance with a desired operation, two registers 14, 14' storing data for input to the next-stage multiplier-accumulator, a first arithmetic unit 15 having a 16x16 MAC, a 40-bit ALU, and an exponenter and a shifter for a block fixed point operation, a second arithmetic unit 16 having a 16x16 MAC and a 40-bit ALU, and an accumulator bank 17 to accumulate and store results operated in the first and second arithmetic unit 15, 16 and switched by the data bus switches 13, 13'. The Carmel™ DSP core, which adopts a CLIW (Configurable Long Instruction Word) architecture, can carry out up to 6 operations including 2 parallel data shifts in a single cycle. Also, as the Carmel™ DSP core supports an automatic scaling mode, an overflow generated in the FFT operations can be handled without having to use an additional cycle. However, the Carmel™ DSP core has a complex hardware configuration since the Carmel™ DSP core is designed in the CLIW architecture to allow the parallel processing of the operations. To carry out N radix-2 complex FFT butterfly operations by using the Carmel™ DSP core, 2N+2 cycles are required.

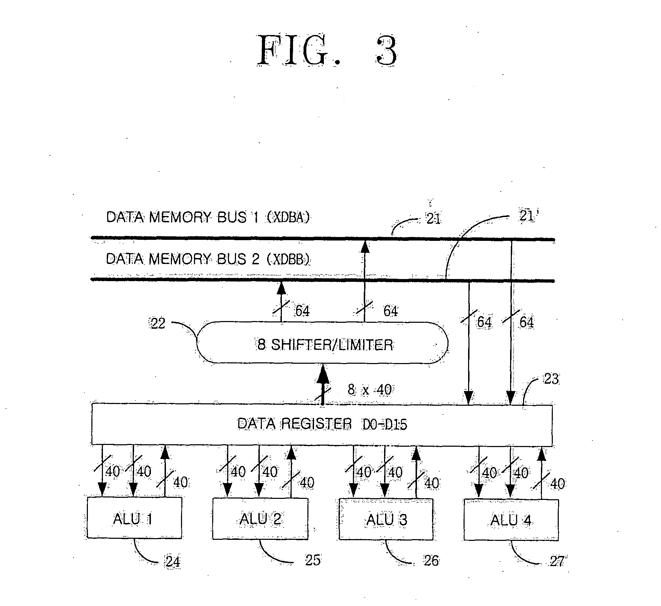

FIG. 3 shows yet another example of an operator using the DIT FFT, especially showing a Starcore™ SC140 operator. The SC140 applying a VLIW (Very Long Instruction Word) architecture includes two data memory buses 21, 21' to send/receive data to and from the data memory, 8 shifter/limiters 22 to shift or limit the operated data stored in the data register and load the data to the data memory buses 21, 21', and four 40-bit ALUs 24, 25,26, 27. As each of the ALUs 24, 25, 26, 27 has a MAC, it is possible to carry out up to four MAC operations or ALU operations in a single cycle. As a result, using the four MACs, the FFT operations are carried out in a less operation cycle than the digital signal processor having a single or dual MAC.

However, the Starcore™ SC140 has a large size and consumes lots of power due to the integration of lots of the operation components. Further, it is difficult to efficiently allot the operation components due to the data dependency and to read or write the required data in the memory during a single cycle due to the lack of the data bus. As a result, the bottleneck may occur so that the performance of the dual MAC structure does not reach to twice as much.

In case of carrying out the N complex FFT butterfly operation using the SC140, 1.5N cycles are required. The above digital signal processors focus on increasing the number of the operators to accelerate the FFT butterfly operation or adjusting the data path fit for the butterfly operation flow. However, there is a limitation to reduce the operation cycle of the butterfly with respect to the limited number of the operators.

Assuming that two cycles are required for the butterfly operation, $(N / 2)\log_2 N$ butterflies are needed for the N-point FFT. Thus, if other influences are not considered, $(2N / 2)\log_2 N$ cycles are needed for the N-point FFT. In fact, during the FFT operation, operation cycles may be additionally generated for data shift or data address calculation.

Table 1 shows the comparison in the number of the butterfly operation cycle and the N-point FFT operation cycle of the Carmel DSP core and the TMS320C62x. As shown in Table 1, except for the butterfly operation cycle, additional cycles are required. In case of the Carmel DSP core, $(2N / 2)\log_2 N$ cycles are needed for the butterfly operation, and in case of the TMS320C62x, $(4N / 2)\log_2 N)$ cycles are needed.

[Table 1]

|  | Number of butterfly operation cycle | N-point FFT |
|---|---|---|
| Carmel DSP core | 2 | $(2N/2)\log_2 N + 5N/4 + 10\log_2 N + 4$ |
| TMS320C62x | 4 | $(4N/2)\log_2 N + 7\log_2 N + N/4 + 9$ |

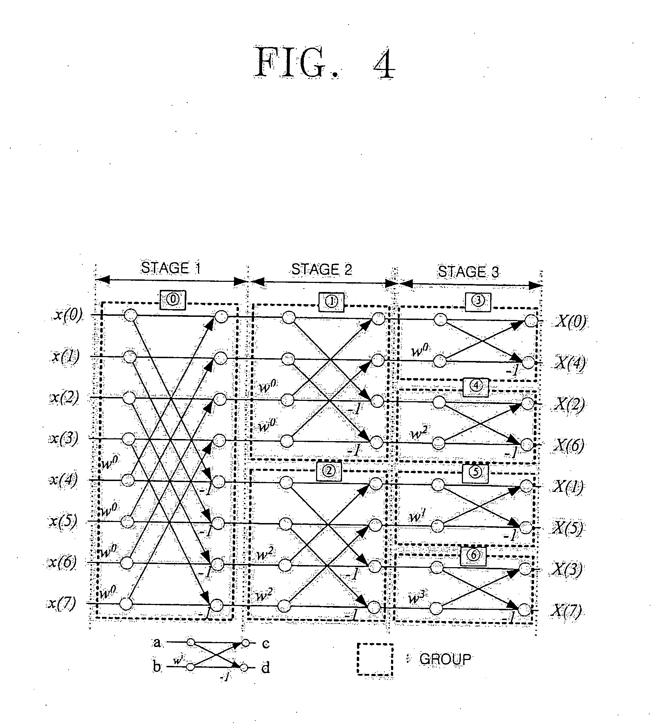

FIG. 4 shows an operation of a general 8-point radix-2 DIT FFT. In case of the N point FFT operation, there are $\log_2 N$ stages and $N$ - 1 groups. Accordingly, there are 3 stages and 7 groups in FIG. 4, and as the number of the stages increases, the number of the butterflies in the group increases or decreases.

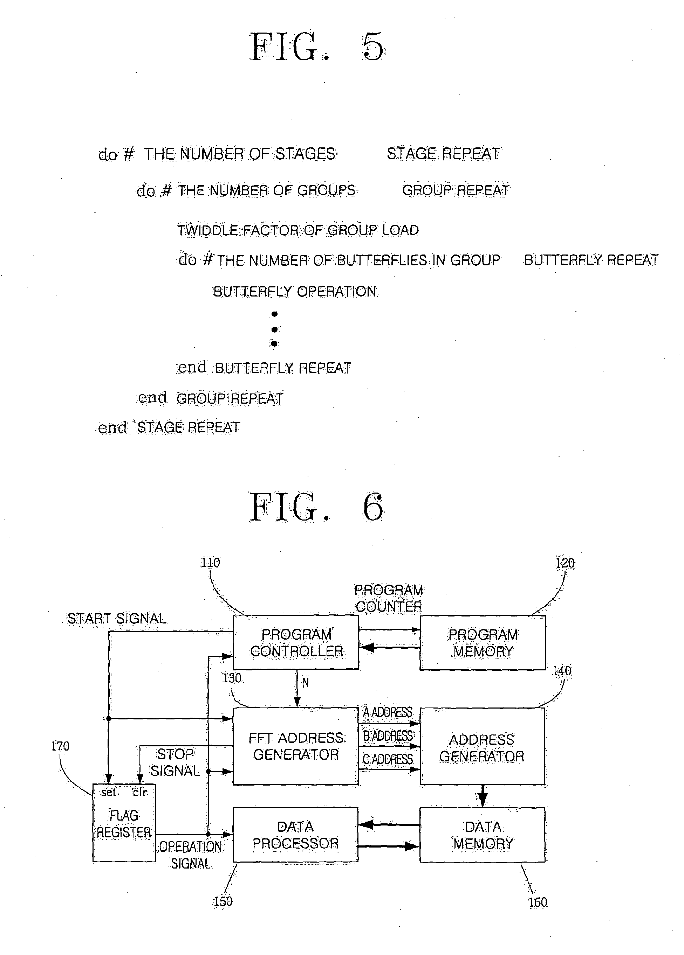

The FFT operation is carried out in one stage and then in the next stage. In a stage, the operation is carried out by the group. As for C or assembly codes to implement the FFT, as shown in FIG. 5, 3 looping instructions are used for the operations of the stages, the groups, and the butterflies in each group, which may vary according to the architectures of a programmable processor and the program. Generally, 3 or 4 cycles are required to carry out the looping instruction in the digital signal processor. Assuming that L cycles are required for a single butterfly operation and M cycles are required to carry out the looping instruction, the number of the cycles to carry out the N point FFT operation can be obtained through the following formula 3.

[Formula 3]

$$(L \times N/2) \log_2 N + M \times (N - 1) + M \log_2 N + \alpha$$

In formula 3, $(L \times N/2) \log_2 N$, which is determined by L, may be changed according to the number of the MACs and the ALUs of the digital signal processor, and $M \times (N - 1) + M \log_2 N$, which is determined by M, may be changed according to the configuration of a program controller of the digital signal processor.

In the butterfly operation in a group of a stage, the address of input data increases by 1. Meanwhile, when the group is altered, the address of input data of butterfly varies according the size of the group. For this, $\alpha$ is used to denote the number of the required cycles and the cycles required to the data shift. If the parallel processing is feasible as in the VLIW processor, the number of the additional operation cycles, except for the butterfly, may be reduced to some degree by parallel-processing diverse instructions through the assembly decoding. However, the effect of the parallel processing is not sufficient. Referring to FIG. 4, the address modification according to the alteration of the group is described by way of example. "a" in the first butterfly (① in FIG. 4, group 1) of the stage 2 is a memory address 0 and "b" is a memory address 2. "a" in the second butterfly of the stage 2 (② in FIG. 4, group 1) is a memory address 1, and "b" is a memory address 3. "a" in the third butterfly of the stage 2 (③ in FIG. 4, group 2) is a memory address 4, and "b" is a memory address 6. The address of the input data "a" in the group 1 increases from 0 by 1. Meanwhile, as the operation is altered from the group 1 to the group 2, the address of "a" changes from 1 to 4. That is, as the group is altered, the address increment of the input data also changes.

As aforementioned, to reduce the number of the operation cycles of the N point FFT in the programmable processor such as the digital signal processor, it is required to minimize the additional operation cycles except for the butterfly operation cycles. However, since the conventional digital processors do not support the hardware structure to reduce the additional operation cycles except for the cycles required for the butterfly operations, it is difficult to reduce the number of the operation cycles.

SUMMARY OF THE INVENTION

According to the invention, there is provided a fast Fourier transform (FFT) operating apparatus to carry out a FFT operation in a programmable processor chip, comprising:

a program controller to generate a FFT start signal and control a programmable processor;
a program memory to store an application of the programmable processor;
an FFT address generator to remove a looping instruction used for the FFT and a cycle for an address generation, and generate an offset address of a butterfly input data and an operation stop signal;
an address generator to calculate an address of a data memory using the offset address generated in the FFT address generator;
a data memory to store a data;
a data processor to carry out an arithmetic and logic operation using the data stored in the data memory; and
a flag register to generate a FFT operation signal.

The invention also provides a radix-2 complex fast Fourier transform (FFT) operation method to carry out a FFT operation in a programmable processor chip, comprising:

generating a start signal and applying a FFT operation signal if the FFT starts;
generating an offset address of a butterfly input/output data to read a data and write an operated result in a data memory;
storing the generated offset address of the butterfly input/output data in an offset register of a programmable processor;
switching a data to provide the butterfly input data from the data memory and write the output data in the data memory;
carrying out a butterfly operation using two multiplier-accumulators, an arithmetic and logic unit, and an exponenter; and
generating a stop signal and resetting the FFT operation signal when the operation is ended.

The invention thus provides a fast Fourier transform (FFT) operating apparatus and an operation method thereof to reduce operations cycles additionally generated in a programmable processor except for a butterfly operation.
The method of the invention preferably involves using operation instructions SBUTTERFLY (subtract butterfly) and ABUTTERFLY (add butterfly), to enable the FFT operation apparatus to carry out the FFT operation.
However, even in a conventional programmable processor in which performance is not enhanced through the acceleration of the butterfly operation, performance can be enhanced by the method of the invention by minimizing operation cycles generated during a looping instruction, data shift, and address calculation of butterfly input data.

BRIEF DESCRIPTION OF THE DRAWINGS

The above aspects and other features of the present invention will become more apparent by describing in detail a preferred embodiment thereof with reference to the attached drawings, in which:

FIG. 1 is a view showing a structure of a DIT FFT butterfly;
FIG. 2 is a view showing a configuration of the conventional Carmel DSP core operator by Infineon Technologies AG;
FIG. 3 is a view showing a configuration of the conventional SC140 operator by Starcore™;
FIG. 4 is a flow graph showing an operation of a conventional 8-point radix-2 DIT FFT;
FIG. 5 is a view showing a programming architecture of a FFT using a looping instruction;
FIG. 6 is a view showing a configuration of a programmable processor for FFT according to the present invention;
FIG. 7 is a flow graph showing an operation of a butterfly according to the present invention;
FIG. 8 is a flow chart showing the generation of an offset address of DIT butterfly data;
FIG. 9 is a view showing a configuration of an operator carrying out the operation of FIG. 8;
FIG. 10 is a view showing a configuration of a data processor carrying out the DIT butterfly operation according to the present invention;
FIG. 11A is a view showing a configuration of a dual multiplier-accumulator having separate 2 multiplier-accumulators;
FIG. 11B is a view showing a configuration of a dual multiplier-accumulator using a 3-input adder;
FIG. 11C is a view showing a dual multiplier-accumulator carrying out functions of FIGS. 11A and 11B using a multiplexer; and
FIG. 12 is a view showing a configuration of a data bus switch of the data processor.

DETAILED DESCRIPTION OF THE PREFERRED EMBODIMENT

Hereinafter, the present invention will be described in detail with reference to the accompanying drawings.
FIG. 6 shows a fast Fourier transform (FFT) operating apparatus to fast operate a N point radix-2 DIT FFT operation without generating additional cycles except for butterfly operations. Referring to FIG. 6, the FFT operating apparatus includes a program controller 110, a program memory 120, a FFT address generator 130, an address generator 140, a data processor 150, a data memory 160, and a flag register 170.
The program controller 110 generates a FFT start signal and controls a programmable processor. The program memory 120 stores an application of the programmable processor. The FFT address generator 130 generates an offset address of a FFT butterfly input data and an operation stop signal. The address generator 140 uses the offset address generated in the FFT address generator 130 to calculate an address of the data memory 160. The data memory 160 stores data, and the data processor 150 uses the data stored in the data memory 160 to carry out an arithmetic and logic operation. The flag register 170 generates a FFT operation signal.

The data processor 150 includes a data bus switch circuit to receive the butterfly input data from the data memory 160 and to write an output data in the data memory 160, a butterfly operation circuit having two multiplier-accumulators to multiply and accumulate the data and one arithmetic and logic unit, an exponential operation circuit to carry out an exponential operation of the data during the butterfly operation, an input register to store data memory values, and an accumulator to store operation results and reuse the stored data for the operation.

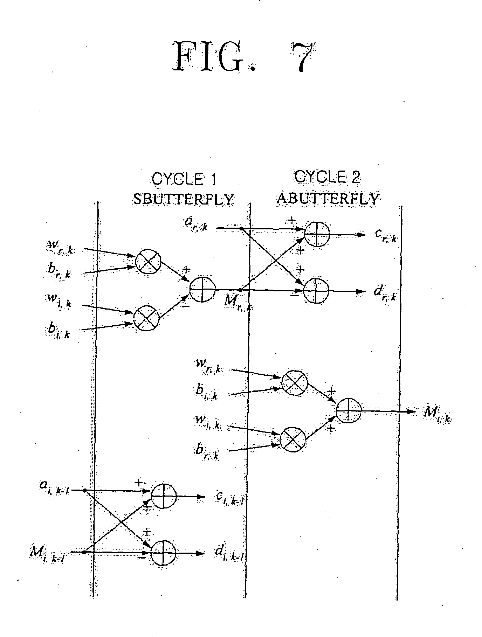

FIG. 7 is a flow graph of the butterfly operation according to the present invention, which shows the butterfly of FIG. 1 as a complex operation. The complex operation is represented as the following formula 4. "a" and "b" denote the butterfly input data, "c" and "d" denote the butterfly output data, and "w" denotes a twiddle factor. Subscripts "r" and "i" respectively denote a real part and an imaginary part of each data.

[Formula 4]

$$c_r = a_r + w_r b_r - w_i b_i$$

$$c_i = a_i + w_r b_i + w_i b_r$$

$$d_r = a_r - w_r b_r + w_i b_i$$

$$d_i = a_i - w_r b_i - w_i b_r$$

To operate a single complex butterfly, 6 input data are required and 4 output data are generated. As the operation is carried out with divided into 2 cycles, it is implemented using a data memory configuration capable of reading 3 input data and writing 2 output data in a single cycle. In a first cycle, two of the 4 input data are multiplied and subtracted. At this time, the operation is carried out according to an operational instruction SBUTTERFLY. In a second cycle, two of the 4 input data are multiplied and added. Also, the operation is carried out according to an operational instruction ABUTTERFLY.

The program controller 110 controls a program of a conventional programmable processor. Also, the program controller 110 decodes a FFT instruction, transmits an N value from the N point FFT to the FFT address generator 130, and generates the FFT operation start signal. The FFT address generator 130 receives the N value and the operation start signal from the program controller 110 to generate the offset address of the data.

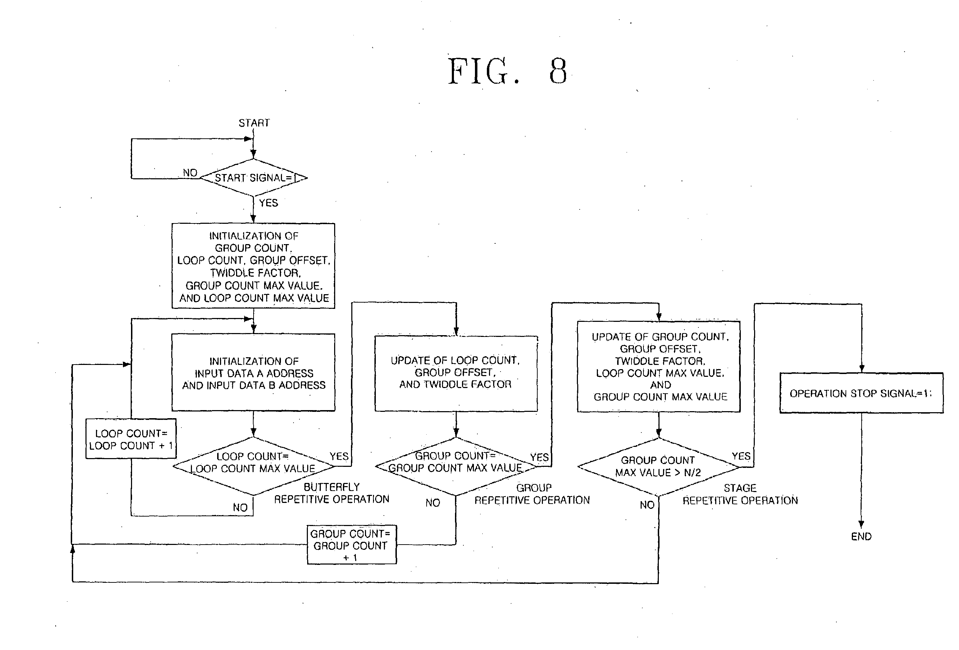

FIG. 8 shows a method to generate the offset address of the data in the FFT address generator 130, which includes starting the FFT if the FFT start signal is '1'; initializing a group count, a loop count, and a group count max value to '1', respectively, a group offset value to '-1', a loop count max value to 'N/2', and an offset address value of the twiddle factor to '0' when the FFT starts; calculating an address of an input data A by adding the group offset and the loop count value, and an address of an input data B by adding the group offset, the loop count, and the loop count max value; if the loop count value is not equal to the loop count max value, increasing the loop count value by 1 and resuming from calculating the addresses of the input data A, B; if the loop count value is equal to the loop count max value, initializing the loop count value to '1', setting the group offset value with a value obtained by multiplying the loop count max value by 2 and adding the group offset value, and increasing the twiddle factor by 1; if the group count is not equal to the group count max value, increasing the group count by 1 and resuming from calculating the addresses of the input data A, B; if the group count value is equal to the group count max value, initializing the group count value to '1', the group offset value to '-1', and the twiddle factor to '0', dividing the loop count max value by 2, and multiplying the group count max value by 2; if the group count max value is greater than N/2, generating the operation stop signal and ending the FFT operation; and, if the group count max value is not greater than N/2, resuming from calculating the addresses of the input data A, B.

In order to calculate the loops of the 3 stages having a butterfly operation loop, a group operation loop, and a stage operation loop, a comparison is carried out three times. The loop count max value and the group count max value respectively represent the number of the butterflies and the number of the groups that are included in each of the groups and the stages. If the loop count value and the group count value respectively reach its max value, the operation carried out to a next group and stage. The group offset represents the address modification value when the group is altered.

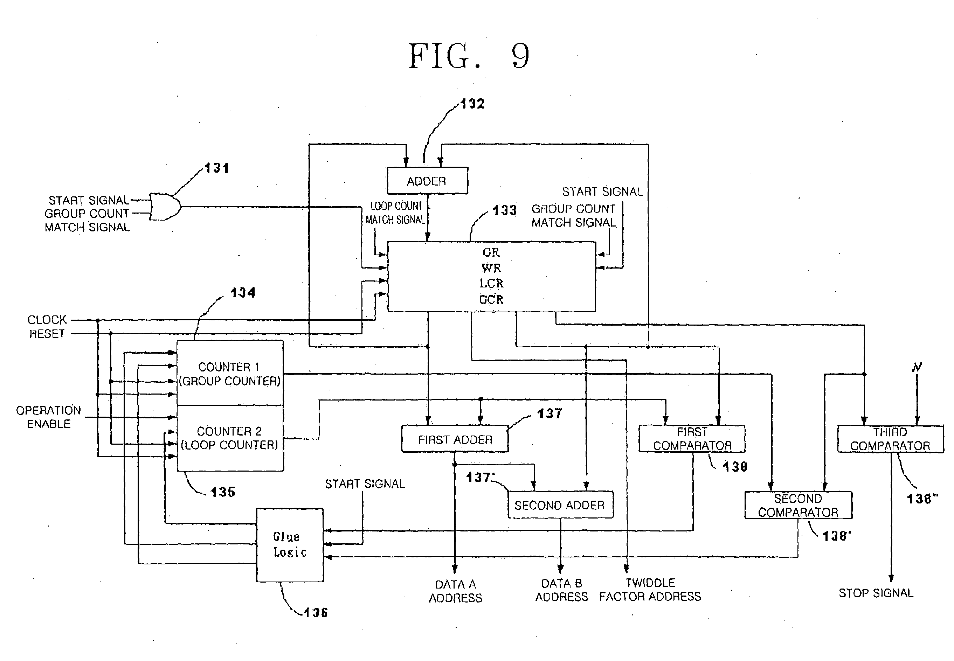

FIG. 9 shows the configuration of the FTT address generator 130 to carry out the operations in FIG. 8. Referring to FIG. 9, the FTT address generator 130 includes a logical sum logic 131, an adder 132, GR, WR, LCR, and GCR registers 133, a group counter 134, a loop counter 135, a glue logic 136, a first adder 137, a second adder 137', a first comparator 138, a second comparator 138', and a third comparator 138". The logical sum logic 131 generates an initialization signal of a register to store the loop count value and a register to store the group count value according to the start signal and a group count match signal. The adder 132 updates the group offset by a value obtained by multiplying the group offset and the loop count max value by 2 and adding the multiplied value. The GR, WR, LCR, GCR registers 133 store the group offset, the twiddle factor, the loop count max value, and the group count max value. The group counter 134 calculates the group count value, and the loop counter 135 calculates the loop count value. The glue logic 136 consists of a logic which generates a signal to initialize the group counter and the loop counter. The first adder 137 outputs the address of the input data A by adding the group offset and the loop counter value. The second adder 137' outputs the address of the input data B by adding the output from the first adder 137 and the loop count max value. The first comparator 138 compares the loop count value and the loop count max value, the second comparator 138' compares the group counter value and the group count max value, and the third comparator 138" is input with the N value and the group count max value and compares the group count max value and the N/2 value.

If the FTT operation start signal is applied, the loop counter 135 and the group counter 134 are initialized to '1', and GR, WR, LCR, GCR registers 133 are initialized to '-1', '0', 'N/2', and '1', respectively. If values of the loop counter 135 and the LCR register 133 are identical, '1' is applied to the loop count match signal. If values of the group counter 134 and the GCR register 133 are identical, '1' is applied to the group count match signal. The group counter 134 carries out the counting only if the loop count match signal is '1'. The loop counter 135 and the group counter 134 are re-initialized when the loop count match signal and the group count match signal become '1', respectively. The GR register 133 has a load input terminal to update a GR register value and another load input terminal to initialize. The WR register 133 increases a WR register value by 1 if the loop count match signal is '1', and is initialized to '0' if the group count match signal is '1'. The WR register 133 outputs a bit-reversed value. The LCR register 133 carries out a 1-bit right shift if the group count match signal becomes '1'. An initial value of the LCR register 133 is N/2. The GCR register 133 carries out a 1-bit left shift every time the group count match signal is applied. If the GCR register value becomes N, the FFT operation stop signal is generated.

The offset address generated in the FFT address generator 130 is input to an offset register of the programmable processor and used as an offset for a base address. A programmable processor which is being currently developed uses plural arithmetic and logic units to calculate the address. Hence, a final data address can be calculated by using the offset address generated in the FTT address generator 130.

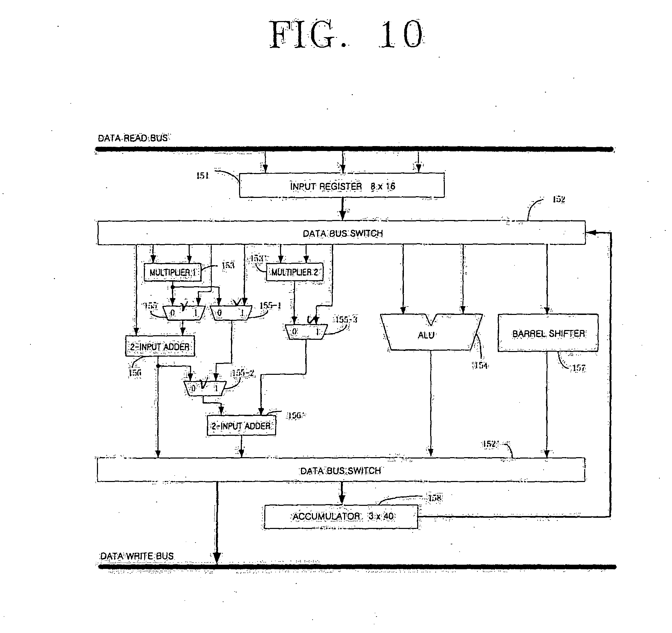

FIG. 10 shows the configuration of the data processor 150 to efficiently carry out the FFT. Referring to FIG. 10, the data processor 150 includes two multiplier-accumulators and an arithmetic and logic unit to carry out the butterfly operation, a data bus switch circuit to control data according to the operation flow, 8 input registers, and three accumulators. By using four multiplexers, the multiplier-accumulator according to the present invention may function as two separate multiplier-accumulators or carry out a function of adding and accumulating two multiplied results.

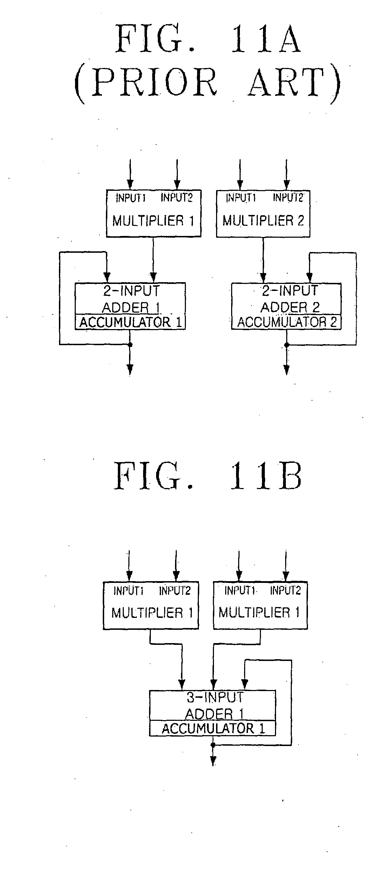

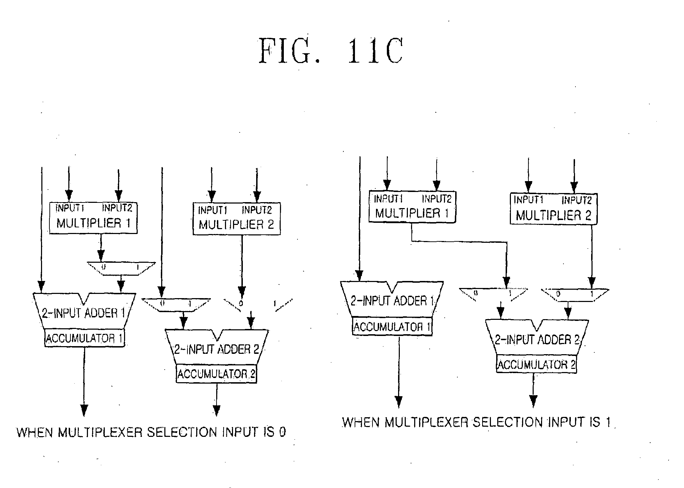

FIG. 11A shows a configuration of a conventional dual multiplier-accumulator having two separate multiplier-accumulators to output two accumulated results. FIG. 11B shows a configuration capable of accumulating sum of two multiplied results by using a 3-input adder. FIG. 11C shows a dual multiplier-accumulator capable of carrying out the above conventional functions by using the multiplexer according to the present invention. If a selection input of the multiplexer is '0', the dual multiplier-accumulator operates as in FIG. 11A, and if a selection input is '1', the dual multiplier-accumulator operates as in FIG. 11B. Five input registers store $a_r$, $a_i$, $b_r$, $b_i$, $w_r$, and $w_i$, respectively. Three accumulators are required to store 2 multiplier-accumulator values and one arithmetic and logic unit value.

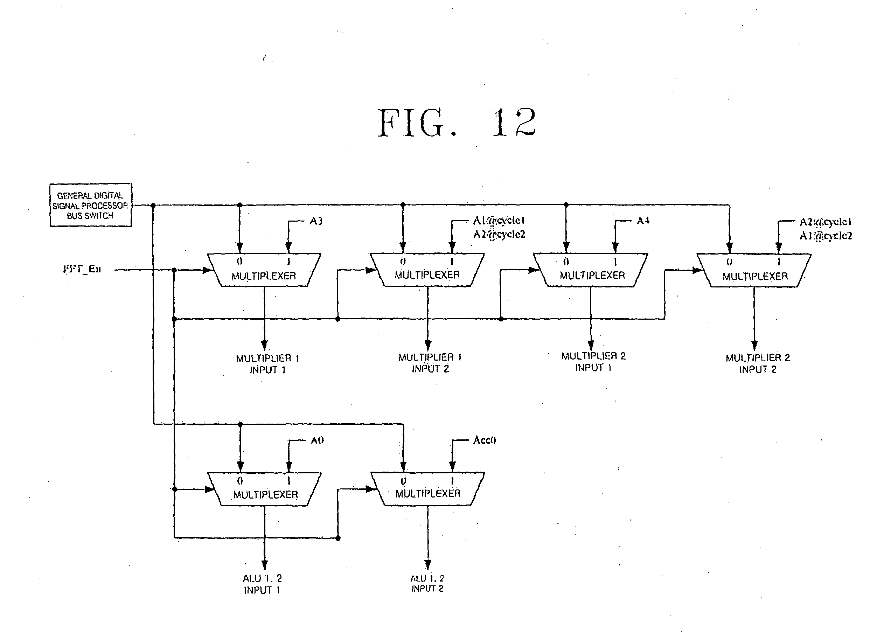

FIG. 12 shows the data bus switch of the data processor 150. The data bus switch can be implemented using six 2x1 multiplexers adapted to a data bus switch of a conventional digital signal processor without having to re-design the circuit.

As aforementioned, the FFT operation method and a circuit to implement the FFT operation method are provided to enhance performance by minimizing the operation cycles which occur in the looping instruction, the data shift, and the address calculation of the butterfly input data in addition to the butterfly operation, in the conventional programmable processor of which performance is not enhanced through the acceleration of the butterfly operation. Further, according to the present invention, the operating apparatus of the conventional digital signal processor can be re-used by including the FFT address generator 130 and the switch circuit of the data to thereby enhance the performance and facilitate the design and the modification.

Table 2 shows the comparison between the conventional programmable processor and the number of the FFT operation cycles together with the number of the multiplier-accumulators. The configuration according to the present invention does not generate additional operation cycles except for the butterfly operation. Compared with a conventional digital signal processor having the same number of the multiplier-accumulators, the 256-point FFT has performance enhanced 16%~57%.

Therefore, the FFT operating apparatus according to the present invention applies less hardware to the conventional programmable processor to thereby reduce the number of the FFT operation cycles, provide design flexibility to a FFT processor which have been implemented with a conventional on-demand semiconductor chip, and allow a real-time processing of an advanced telecommunication system.

[Table 2]

| Digital signal processor | Number of butterfly operation cycles | N=256 | N=1024 | Formula | number of MAC |
|---|---|---|---|---|---|
| DSP1620 | - | 16065 | - | - | 1 |
| DSP56602 | 8 | 9600 | 49680 | - | 1 |
| DSP56303 | - | 9096 | - | - | 1 |
| TMS320C54x | 8 | 8542 | 42098 | - | 1 |
| TMS320C55x | 5 | 4786 | - | - | 2 |
| TMS320C62x | 4 | 4225 | 20815 | $(4N/2)\log_2 N + 7\log_2 N + N/4 + 9$ | 2 |
| TMS320C67x | - | 4286 | 20716 | $(2N/2)\log_2 N + 23\log_2 N + 6$ | 2 |
| Carmel DSP core | 2 | 2452 | 11624 | $(2/N)\log_2 N + 5N/4 + 10\log_2 N + 4$ | 2 |
| Palm DSP core | 2 | - | - | - | 2 |
| Frio core | 3 | 3176 | - | - | 2 |
| StarCore (SC140) | 1.5 | - | - | - | 4 |
| Configuration of the present invention | 2 | 2051 | 10243 | $(2N/2)\log_2 N + 6$ | 6 |

Although a few preferred embodiments of the present invention has been described, it will be understood by those skilled in the art that the present invention should not be limited to the described preferred embodiments, but various changes and modifications can be made within the scope of the present invention as defined by the appended claims.

**Claims**

1. A fast Fourier transform (FFT) operating apparatus to carry out a FFT operation in a programmable processor chip, comprising:

   a program controller to generate a FFT start signal and control a programmable processor;
   a program memory to store an application of the programmable processor;
   an FFT address generator to remove a looping instruction used for the FFT and a cycle for an address generation, and generate an offset address of a butterfly input data and an operation stop signal;
   an address generator to calculate an address of a data memory using the offset address generated in the FFT address generator;
   a data memory to store a data;
   a data processor to carry out an arithmetic and logic operation using the data stored in the data memory; and
   a flag register to generate a FFT operation signal.

2. The apparatus of claim 1, wherein the FFT address generator comprises:

   a logical sum logic to generate initialization signals of a register to store a loop count value and a register to store a group count value according to the start signal and a group count match signal;
   a first adder to update a group offset with a value obtained by multiplying the group offset and a loop count max value by 2;
   GR, WR, LCR, and GCR registers to store the group offset, a twiddle factor, the loop count max value, and a group count max value;
   a group counter to calculate the group count value;
   a loop counter to calculate the loop count value;

a glue logic having a logic which generates a signal to initialize the group counter and the loop counter;
a second adder to add the group offset and the loop count value and output a single input data address;
a third adder to input with and add the second adder and the loop count max value and output another input data address;
a first comparator to compare a value of the loop counter and the loop count max value;
a second comparator to compare a value of the group counter and the group count max value; and
a third comparator to input with a N value and the group count max value and compare the group count max value with a N/2 value.

3. The apparatus of claim 1 or 2, wherein the data processor comprises:

a data bus switch circuit to provide the butterfly input data from the data memory and write an output data in the data memory;
a butterfly operation circuit having two multiplier-accumulators to multiply and accumulate a data and one arithmetic and logic unit;
an exponential operation circuit to carry out an exponential operation of a data in the butterfly operation;
an input register to store a value of the data memory; and
an accumulator to store an operation result and re-use the stored value for the operation.

4. A radix-2 complex fast Fourier transform (FFT) operation method to carry out a FFT operation in a programmable processor chip, comprising:

generating a start signal and applying a FFT operation signal if the FFT starts;
generating an offset address of a butterfly input/output data to read a data and write an operated result in a data memory;
storing the generated offset address of the butterfly input/output data in an offset register of a programmable processor;
switching a data to provide the butterfly input data from the data memory and write the output data in the data memory;
carrying out a butterfly operation using two multiplier-accumulators, an arithmetic and logic unit, and an exponenter; and
generating a stop signal and resetting the FFT operation signal when the operation is ended.

5. The method of claim 4, wherein operation instructions SBUTTERFLY and ABUTTERFLY are used for the FFT operation.

6. The method of claim 4 or 5, wherein generating the offset address by a FTT address generator comprises:

starting the FFT if the FFT start signal is '1';
initializing a group count, a loop count, and a group count max value to '1', respectively, a group offset value to '-1', a loop count max value to 'N/2', and an offset address value of a twiddle factor to '0' if the FFT starts;
calculating an input data by adding the group offset and the loop count values and calculating another input data by adding the group offset, the loop count, and the loop count max values;
increasing the loop count value by 1 if the loop count value is not equal to the loop count max value and resuming from calculating the two input data addresses;
initializing the loop count value to '1', setting the group offset value with a value obtained by multiplying the loop count max value by 2 and adding the group offset value to the multiplied value, and increasing the twiddle factor value by 1 if the loop count value is equal to the loop count max value;
increasing the group count value by 1 and resuming from calculating the two input data addresses if the group count is not equal to the group count max value;
initializing the group count value to '1', the group offset value to '-1', and the twiddle factor value to '0', dividing the loop count max value by 2, and multiplying the group count max value by 2 if the group count value is equal to the group count max value;
generating the operation stop signal and ending the FFT operation if the group count max value is greater than N/2; and
resuming from calculating the two input data addresses if the group count max value is not greater than N/2.

# FIG. 1

# FIG. 2

DATA MEMORY

# FIG. 3

DATA MEMORY BUS 1 (XDBA)    21    21'

DATA MEMORY BUS 2 (XDBB)

64    64    64    64

22

8 SHIFTER/LIMITER

8 x 40    23

DATA REGISTER  D0-D15

40  40  40      40  40  40      40  40  40      40  40  40

| ALU 1 | ALU 2 | ALU 3 | ALU 4 |

24    25    26    27

# FIG. 4

# FIG. 5

do #  THE NUMBER OF STAGES        STAGE REPEAT

   do # THE NUMBER OF GROUPS         GROUP REPEAT

      TWIDDLE FACTOR OF GROUP LOAD

      do # THE NUMBER OF BUTTERFLIES IN GROUP     BUTTERFLY REPEAT

         BUTTERFLY OPERATION

         •
         •
         •

      end  BUTTERFLY REPEAT

   end  GROUP REPEAT

end  STAGE REPEAT

# FIG. 6

# FIG. 7

# FIG. 8

START

START SIGNAL=1 — NO (loop back)

YES

INITIALIZATION OF
GROUP COUNT,
LOOP COUNT, GROUP OFFSET,
TWIDDLE FACTOR,
GROUP COUNT MAX VALUE,
AND LOOP COUNT MAX VALUE

INITIALIZATION OF
INPUT DATA A ADDRESS
AND INPUT DATA B ADDRESS

LOOP COUNT=
LOOP COUNT MAX VALUE — YES

LOOP COUNT=
LOOP COUNT + 1

NO

BUTTERFLY
REPETITIVE OPERATION

UPDATE OF LOOP COUNT,
GROUP OFFSET,
AND TWIDDLE FACTOR

GROUP COUNT=
GROUP COUNT MAX VALUE — YES

GROUP COUNT=
GROUP COUNT
+ 1

NO

GROUP
REPETITIVE OPERATION

UPDATE OF GROUP COUNT,
GROUP OFFSET,
TWIDDLE FACTOR,
LOOP COUNT MAX VALUE,
AND
GROUP COUNT MAX VALUE

GROUP COUNT
MAX VALUE > N/2 — YES

NO

STAGE
REPETITIVE OPERATION

OPERATION STOP SIGNAL=1;

END

EP 1 429 256 A2

FIG. 9

START SIGNAL — GROUP COUNT MATCH SIGNAL — 131

132 — ADDER

START SIGNAL GROUP COUNT MATCH SIGNAL

LOOP COUNT MATCH SIGNAL

133

GR
WR
LCR
GCR

134

CLOCK
RESET

COUNTER 1 (GROUP COUNTER)

OPERATION ENABLE

COUNTER 2 (LOOP COUNTER)

135

START SIGNAL

FIRST ADDER — 137

137' — SECOND ADDER

FIRST COMPARATOR — 138

136 — Glue Logic

SECOND COMPARATOR — 138'

THIRD COMPARATOR

N

138"

DATA A ADDRESS

DATA B ADDRESS

TWIDDLE FACTOR ADDRESS

STOP SIGNAL

EP 1 429 256 A2

# FIG. 10

DATA READ BUS

151 — INPUT REGISTER 8 x 16

152

DATA BUS SWITCH

MULTIPLIER 1  153    153  MULTIPLIER 2

155    155-1    155-3

0  1    0  1    0  1

2-INPUT ADDER

156    155-2

0  1

2-INPUT ADDER    156

ALU    154    BARREL SHIFTER    157

152

DATA BUS SWITCH

158

ACCUMULATOR 3 x 40

DATA WRITE BUS

# FIG. 11A
# (PRIOR ART)

# FIG. 11B

# FIG. 11C

WHEN MULTIPLEXER SELECTION INPUT IS 0

WHEN MULTIPLEXER SELECTION INPUT IS 1

# FIG. 12